# EUROPÄISCHE PATENTSCHRIFT

(11) **EP 0 655 701 B1**
(45) Veröffentlichungstag und Bekanntmachung des Hinweises auf die Patenterteilung: **26.01.2000**
(21) Anmeldenummer: 94116925.2
(22) Anmeldetag: 26.10.1994
(51) Int. Cl.: G01S 13/02, G06K 7/10, G01V 15/00

(54) **Mit akustischen Oberflächenwellen arbeitende Identifizierungsmarke**
Identifying mark working with surface acoustic waves
Marque d'identification fonctionnant avec des ondes acoustiques de surface

(30) Priorität: 26.10.1993 DE 4336504
(43) Veröffentlichungstag der Anmeldung: 31.05.1995
(73) Patentinhaber: SIEMENS AKTIENGESELLSCHAFT, 80333 München (DE)
(72) Erfinder: Magori, Valentin, Dipl.-Phys., D-81539 München (DE); Talke, Wolfgang, Dr.-Ing., D-38889 Blankenburg/Harz (DE)

(56) Entgegenhaltungen:
- US-A- 4 209 783
- US-A- 4 746 830

## Beschreibung

Die vorliegende Erfindung betrifft eine mit akustischen Oberflächenwellen arbeitende Identifizierungsmarke - ID-Tag - für Identifizierungssysteme nach dem Oberbegriff des Patentanspruchs 1.

Identifizierungssysteme der gattungsgemäßen Art werden zur berührungslosen automatischen Identifikation von Objekten, wie beispielsweise Fahrzeugen oder Behältern verwendet, wobei möglichst häufig und routinmäßig erkannt werden soll, ob sich die Objekte in einem ordnungsgemäßen Zustand befinden oder nicht. Liegt kein ordnungsgemäßer Zustand vor, so kann ein möglicher Schaden durch frühzeitige Erkennung durch besondere Maßnahmen, wie beispielsweise Aussondern oder besondere Vorsicht minimiert werden. Insbesondere können diagnostische Maßnahmen ergriffen werden, die als Routine zu aufwendig wären und die insbesondere auch relativ zeitaufwendig sind. Die Mittel für eine derartige Erkennung sollen kostengünstig, robust, reversibel und ohne eigenen Strombedarf sein und die Erkennung des Zustandes in sehr kurzer Zeit auch bei hoher Geschwindigkeit ermöglichen.

Aus der nicht vorveröffentlichten internationalen Anmeldung WO 94/11754 ist eine Identifizierungsmarke auf der Basis eines Oberflächenwellenbauelements bekannt, bei dem die aufgeprägte Kodierung mittels mit den Reflektoren verbundener Schalter programmierbar ist.

Aus der "Siemens-Zeitschrift Spezial FuE", Frühjahr 1993, Seiten 29 und 30 ist es bereits bekannt, in mit akustischen Oberflächenwellen arbeitenden Identifizierungsmarken mindestens einen Reflektor in seiner Reflexion zu beeinflussen, d. h. sein entsprechendes Bit beispielsweise auf eine logische "Null", oder auf auf eine logische "Eins" zu setzen.

Der vorliegende Erfindung liegt die Aufgabe zugrunde, die umschaltmöglichkeit von Identifizierungsmarken so auszubilden, daß eine vielseitige Überwachungsmöglichkeit von Gefahrenzuständen auf den verschiedensten Gebieten möglich ist.

Diese Aufgabe wird bei einer mit akustischen Oberflächenwellen arbeitenden Identifizierungsmarke der eingangs genannten Art erfindungsgemäß durch die Merkmale des kennzeichnenden Teils des Patentanspruchs 1 gelöst.

Erfindungsgemäß wird es möglich, generell eventuelle Störungen zu signalisieren und Schäden durch frühzeitige Erkennung möglichst gering zu halten. In einfacher Weise kann somit beispielsweise der Zustand von Lagern und Rädern von Fahrzeugen durch Auswertung der Laufgeräusche über Sensoren, insbesondere intelligente Sensoren oder etwa die Temperatur in Kühlwaggons überwacht werden, um nur zwei mögliche Anwendungsfälle zu nennen.

Weiterbildungen der Erfindung sind Gegenstand von Unteransprüchen.

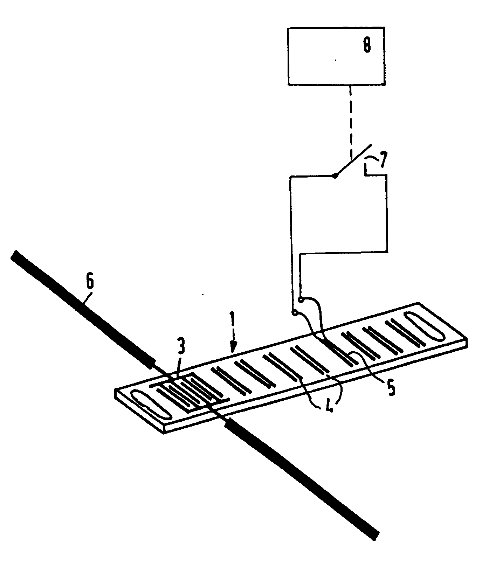

Die Erfindung wird nachfolgend anhand eines in der einzigen Figur der Zeichnung dargestellten Ausführungsbeispiels näher erläutert. Die Figur der Zeichnung zeigt dabei in schematischer, teilweise perspektivischer Darstellung den generellen Aufbau einer Identifizierungsmarke mit einer umschaltmöglichkeit mindestens eines Reflektors im Sinne der Erfindung.

Wie die Figur der Zeichnung zeigt, wird eine mit akustischen Oberflächenwellen arbeitende Identifizierungsmarke 1 - ID-Tag - generell durch ein piezoelektrisches Substrat 2 gebildet, auf dem ein Eingangs/Ausgangs-Interdigitalwandler 3 angeordnet ist, der ein in ihn eingespeistes elektrisches Signal in eine sich an der Oberfläche des Substrats 2 ausbreitende akustische Oberflächenwelle umsetzt und eine in ihn einlaufende akustische Oberflächenwelle in ein elektrisches Signal rückübersetzt. Ein elektrisches Signal wird in diesen Eingangs/Ausgangs-Interdigitalwandler 3 über eine Antenne 6 eingespeist bzw. ausgesendet. Diese Antenne 6 nimmt ein von einem nicht dargestellten Abfrage/Auswertegerät drahtlos übertragene Abfragesignal auf und strahlt ein elektrisches Signal vom Eingangs/Ausgangs-Interdigitalwandler 3 ab.

Weiterhin sind auf dem piezoelektrischen Substrat 2 mehrere Reflektoren 4 und 5 vorgesehen, welche die vom Eingangs/Ausgangs-Interdigitalwandler 3 abgegebene akustische Oberflächenwelle auf ihn rückreflektieren, wodurch ein für das ID-Tag kennzeichnender Code entsteht. Dieser Code wird über die Antenne 6 abgestrahlt und auf das Abfrage/Auswertegerät rückgesendet.

Erfindungsgemäß ist nun mindestens ein Reflektor, im vorliegenden Beispiel der Reflektor 5, in seiner Reflexion durch einen durch Sensoren betätigbaren Schalter elektrisch umschaltbar. Diese Umschaltung erfolgt durch einen schematisch dargestellten Schalter 7, der zu seiner Umschaltung mit einem Sensor 8 gekoppelt ist.

Sowohl der Schalter 7 als auch der Sensor 8 können in einer Vielzahl von Ausführungsformen realisiert werden. Gemäß einer Ausführungsform der Erfindung kann der Schalter 7 ein bistabiles Schaltelement, wie beispielsweise ein polarisiertes Relais oder ein Stromstroßrelais sein. Ein derartiges Relais wird vorzugsweise von selbst elektrische Energie erzeugenden Sensoren, also in vorteilhafter Weise ohne Benutzung einer Batterie betätigt.

Als Sensoren kommen beispielsweise Thermoelemente zur Erfassung starker Erwärmung beispielsweise von Axlagern, temperaturgeführten Ladungen etwa in Kühlwagons, Roheisenpfannen oder Wärmeguttransporten, Piezosensoren zur Erfassung beispielsweise von starken Laufgeräuschen oder exzessiven Rangierstößen von Fahrzeugen oder Magnetspulenanordnungen zur Anwendung, welche bei hoher Krafteinwirkung oder Zugspannung, z. B. beim Brechen, bei zu geringer Kraft oder bei Zugspannung von/an Ladungssicherungselementen umschnappen und dabei die für das Relais notwendige elektrische Energie liefern.

Insbesondere Wärmeguttransporte, wie beispielsweise der Transport von heißem Wasser, sind ein gutes Beispiel dafür, wie die Verfügbarkeit robuster automatischer Sensor- und Überwachungseinrichtungen die Wirtschaftlichkeit und Sicherheit logistischer Konzepte stark beeinflußt.

In weiterer Ausgestaltung der Erfindung können als Schalter zur Umschaltung der Reflexion von Reflektoren mechanische Schalter vorgesehen sein, welche mit Sensoren etwa in Form von seismischen Massen oder Haftmagneten gekoppelt sind. Werden als Sensoren seismische Massen verwendet, so werden solche Massen bei Krafteinwirkung, z. B. bei starker Erschütterung oder Beschleunigung oder Entstehen oder Fehlen einer Zugspannung (Ladungssicherung), oder bei Vorhandensein bzw. Nichtvorhandensein von Gegenständen, welche den Verlauf von magnetischen Feldlinien beeinflussen, von einer stabilen Lage in eine andere Lage gebracht und betätigen dabei den mechanischen Schalter. Als Sensoren können auch Reed-Schalter verwendet werden, welche von einem Haftmagneten gehalten werden. Bei starken Erschütterungen oder Stößen wird der Haftmagnet abgeworfen, wodurch der Reed-Schalter umgeschaltet wird.

Die vorstehenden Ausführungsformen sind nicht auf die Umschaltung eines einzigen Reflektors und damit eines Bit im ID-Tag beschränkt. Es können beispielsweise auch zwei einander zugeordnete Bits etwa durch Wechselschalter gegensätzlich geschaltet werden, wobei an dem dem einen Bit zugeordneten Reflektor der Arbeitskontakt und an dem dem anderen Bit zugeordneten Reflektor der Ruhekontakt schaltet. Vorzugsweise sind dabei die beiden Schalter miteinander gekoppelt. Dadurch kann insbesondere selbst bei einem niedrigen Schaltkontrast zwischen einer logischen "Null" und einer logischen "Eins" eine sehr hohe Erkennungssicherheit erreicht werden. Es muß dabei lediglich festgestellt werden, welches der beiden Bits die jeweils höher Amplitude aufweist.

In Weiterbildung der Erfindung können als Schalter zur Reflektorumschaltung auch Zellen elektronischer nichtflüchtige Speicher, wie beispielsweise nichtflüchtige Speicher mit wahlfreiem Zugriff oder umprogrammierbare Festwertspeicher Verwendung finden. Die Speicherzellen bilden dabei die Schalter, da Speicherzustände durch fließendem bzw. nicht fließendem Strom definiert sind. Derartige Speicher werden von einer Sensor-Auswerteelektronik angesteuert, wobei die Information auch dann gehalten wird, wenn die Sensor-Auswerteelektronik in einem extrem stromsparenden Ruhebetrieb arbeitet.

Die Sensor-Auswertelektronik kann dabei durch Funksignale vom Abfrage/Auswertegerät kurzfristig aktiviert und ggf. auch mit Energie versorgt werden. Dabei ist es zweckmäßig, die Schaltfunktion durch Schaltdioden zu realisieren.

In Weiterbildung der Erfindung ist es dabei auch möglich, im oben bereits angegebenen Sinne anstelle eines Bits ein Paar von einander zugeordneten Bits auszunutzen, wobei jeweils ein Bit dieses Paares zum anderen Bit entgegengesetzt gesetzt ist. Daraus ergibt sich der zusätzliche Vorteil einer Selbstüberwachung. Bei einem Ausfall des Speichers oder einer fehlerhaften Aktivierung durch ein Abfragesignal sind beide Bits gleichzeitig gesetzt bzw. nicht gesetzt.

Gemäß einem weiteren Merkmal kann zur Speicherung der von Sensoren, beispielsweise piezoelektrischen oder elektrodynamischen Vibrationsaufnehmern, gelieferten Energie ein elektrischer Akkumulator, beispielsweise in Form eines Speicherkondensators vorgesehen werden, dem ein Schwellenschalter nachgeschaltet werden kann, wobei der Akkumulator bei Überschreiten einer Schwelle mittels des Schwellwertschalters, der beispielsweise Lawinendurchbruchcharakteristik besitzen kann, über eine Betätigungseinrichtung des Reflektorschalters entladen werden kann.

Schließlich ist es erfindungsgemäß auch möglich, Mittel zur Rücksetzung der Reflektorumschaltung nach Erkennung der Störung zu sehen, die automatische, manuelle oder durch geeignete Vorrichtungen, wie beispielsweise Schlüssel, mechanische, magnetische oder elektrische Einrichtungen betätigbare Mittel sein können.

Es sei abschließend darauf hingewiesen, daß die oben angegebenen Ausführungsformen von Schaltern und Sensoren für sich genommen bekannte Komponenten darstellen, so daß auf eine detaillierte Darstellung in der Zeichnung verzichtet werden kann.

## Patentansprüche

1. Mit akustischen Oberflächenwellen arbeitende Identifizierungsmarke - ID-Tag - für Identifizierungssysteme, in denen ein Abfrage/Auswertegerät eine Identifizierungsmarke mittels eines drahtlos übertragenen Abfragesignals abfragt und ein von Identifizierungsmarken rückgesendetes Antwortsignal auswertet, bei der mindestens ein Reflektor (5) von ID-Tag-Reflektoren (4, 5) in seiner Reflexion elektrisch umschaltbar ist, **dadurch gekennzeichnet**, daß der umschaltbare Reflektor (5) mit einem durch Sensoren (8) betätigbaren Schalter (7) gekoppelt ist.

2. Identifizierungsmarke nach Anspruch 1, **dadurch gekennzeichnet**, daß der Schalter (7) ein sensorbetätigtes bistabiles Schaltelement ist.

3. Identifizierungsmarke nach Anspruch 1 und 2, **dadurch gekennzeichnet**, daß das bistabile Schaltelement ein polarisiertes Relais ist.

4. Identifizierungsmarke nach Anspruch 1 und 2, **dadurch gekennzeichnet**, daß das bistabile Schaltelement ein Stromstoßrelais ist.

5. Identifizierungsmarke nach einem der Ansprüche 1 bis 4, **dadurch gekennzeichnet**, daß der Sensor (8) zur Betätigung des bistabilen Schaltelements (7) ein Thermoelement ist.

6. Identifizierungsmarke nach einem der Ansprüche 1 bis 4, **dadurch gekennzeichnet**, daß der Sensor (8) zur Betätigung des bistabilen Schaltelements (7) eine Magnetspulenanordnung ist.

7. Identifizierungsmarke nach Anspruch 1, **dadurch gekennzeichnet**, daß der Schalter (7) ein sensorbetätigter mechanischer Schalter ist.

8. Identifizierungsmarke nach Anspruch 1 und 7, **dadurch gekennzeichnet**, daß der Sensor (8) zur Betätigung des mechanischen Schalters (7) eine seismische Masse ist.

9. Identifizierungsmarke nach Anspruch 1 und 7, **dadurch gekennzeichnet**, daß der Sensor (8) zur Betätigung des mechanischen Schalters (7) ein Magnetsensor ist.

10. Identifizierungsmarke nach Anspruch 9, **dadurch gekennzeichnet**, daß der Magnetsensor ein Reed-Kontakt ist.

11. Identifizierungsmarke nach einem der Ansprüche 1 bis 10, **gekennzeichnet durch** eine Umschaltung von zwei Reflektoren mittels eines Wechselschalters.

12. Identifizierungsmarke nach Anspruch 1, **dadurch gekennzeichnet**, daß als Schalter (7) Zellen von nichtflüchtigen elektronischen Speichern dienen, die von einer Sensor-Auswerteelektronik angesteuert sind.

13. Identifizierungsmarke nach Anspruch 12**, dadurch gekennzeichnet**, daß die Sensor-Auswerteelektronik durch das Abfrage/Auswertegerät ansteuerbar ist.

14. Identifizierungsmarke nach Anspruch 12 und 13**, dadurch gekennzeichnet**, daß die Sensor-Auswerteelektronik durch das Abfrage/Auswertegerät mit zu ihrem Betrieb erforderlicher Energie versorgbar ist.

15. Identifizierungsmarke nach einem der Ansprüche 1 bis 14, **dadurch gekennzeichnet**, daß als Schalter (7) mindestens eine Schaltdiode vorgesehen ist.

16. Identifizierungsmarke nach einem der Ansprüche 1 bis 5, **dadurch gekennzeichnet**, daß ein elektrisches Akkumulator zur Speicherung der von Sensoren gelieferten Energie vorgesehen ist.

17. Identifizierungsmarke nach Anspruch 16, **dadurch gekennzeichnet**, daß dem Akkumulator ein Schwellwertschalter nachgeschaltet ist.

18. Identifizierungsmarke nach einem der Ansprüche 1 bis 17, **gekennzeichnet durch** Mittel zur Rücksetzung der Reflektorumschaltung.

## Claims

1. Identification mark - ID tag - which operates using surface acoustic waves for identification systems, in which an interrogation/evaluation unit interrogates an identification mark by means of an interrogation signal transmitted without wires and evaluates a response signal which is returned from identification marks, in the case of which the reflection of at least one reflector (5) can be electrically switched by ID tag reflectors (4,5), characterized in that the switchable reflector (5) is coupled to a switch (7) which can be operated by sensors (8).

2. Identification mark according to Claim 1, characterized in that the switch (7) is a sensor-operated bistable switching element.

3. Identification mark according to Claims 1 and 2, characterized in that the bistable switching element is a polarized relay.

4. Identification mark according to Claims 1 and 2, characterized in that the bistable switching element is a current impulse relay.

5. Identification mark according to one of Claims 1 to 4, characterized in that the sensor (8) for operating the bistable switching element (7) is a thermocouple.

6. Identification mark according to one of Claims 1 to 4, characterized in that the sensor (8) for operating the bistable switching element (7) is a magnetic coil arrangement.

7. Identification mark according to Claim 1, characterized in that the switch (7) is a sensor-operated mechanical switch.

8. Identification mark according to Claims 1 and 7, characterized in that the sensor (8) for operating the mechanical switch (7) is a seismic mass.

9. Identification mark according to Claims 1 and 7, characterized in that the sensor (8) for operating the mechanical switch (7) is a magnetic sensor.

10. Identification mark according to Claim 9, characterized in that the magnetic sensor is a reed contact.

11. Identification mark according to one of Claims 1 to 10, characterized by two reflectors being switched over by means of a changeover switch.

12. Identification mark according to Claim 1, characterized in that cells of non-volatile electronic memories are used as the switch (7), which cells are actuated by sensor evaluation electronics.

13. Identification mark according to Claim 12, characterized in that the sensor evaluation electronics can be actuated by the interrogation/evaluation unit.

14. Identification mark according to Claims 12 and 13, characterized in that the sensor evaluation electronics can be supplied by the interrogation/evaluation unit with the power required to operate them.

15. Identification mark according to one of Claims 1 to 14, characterized in that at least one switching diode is provided as the switch (7).

16. Identification mark according to one of Claims 1 to 5, characterized in that an electrical rechargeable battery is provided in order to store the energy supplied from sensors.

17. Identification mark according to Claim 16, characterized in that a threshold value switch is connected downstream of the rechargeable battery.

18. Identification mark according to one of Claims 1 to 17, characterized by means for resetting the reflector changeover.

## Revendications

1. Repère d'identification - ID-Tag - travaillant par des ondes acoustiques de surface pour des systèmes d'identification dans lesquels un appareil d'interrogation/exploitation interroge un repère d'identification au moyen d'un signal d'interrogation transmis sans fil et exploite un signal de réponse envoyé en retour par des repères d'identification, dans lequel la réflexion d'au moins un réflecteur (5) parmi des réflecteurs (4, 5) ID-Tag peut être commuté électriquement, caractérisé en ce que le réflecteur (5) qui peut être commuté est coupé à un commutateur (7) pouvant être actionné par des capteurs (8).

2. Repère d'identification suivant la revendication 1, caractérisé en ce que le commutateur (7) est un élément de commutation bistable actionné par capteur.

3. Repère d'identification suivant la revendication 1 et 2, caractérisé en ce que l'élément de commutation bistable est un relais polarisé.

4. Repère d'identification suivant la revendication 1 et 2, caractérisé en ce que l'élément de commutation bistable est un relais à impulsion.

5. Repère d'identification suivant l'une des revendications 1 à 4, caractérisé en ce que le capteur (8) servant à actionner l'élément (7) de commutation bistable est un thermocouple.

6. Repère d'identification suivant l'une des revendications 1 à 4, caractérisé en ce que le capteur (8) servant à actionner l'élément (7) de commutation bistable est un dispositif de bobine magnétique.

7. Repère d'identification suivant la revendication 1, caractérisé en ce que le commutateur (7) est un commutateur mécanique actionné par capteur.

8. Repère d'identification suivant la revendication 1 et 7, caractérisé en ce que le capteur (8) servant à actionner le commutateur (7) mécanique est une masse sismique.

9. Repère d'identification suivant la revendication 1 et 7, caractérisé en ce que le capteur (8) servant à actionner le commutateur (7) mécanique est un capteur magnétique.

10. Repère d'identification suivant la revendication 9, caractérisé en ce que le capteur magnétique est un contact Reed.

11. Repère d'identification suivant l'une des revendications 1 à 10, caractérisé par une commutation de deux réflecteurs au moyen d'un commutateur alternant.

12. Repère d'identification suivant la revendication 1, caractérisé en ce que l'on utilise comme commutateur (7) des cellules de mémoire électronique non volatile qui sont commandées par une électronique d'exploitation à capteur.

13. Repère d'identification suivant la revendication 12, caractérisé en ce que l'électronique d'exploitation à capteur peut être commandée par l'appareil d'interrogation/exploitation.

14. Repère d'identification suivant la revendication 12 et 13, caractérisé en ce que l'électronique d'exploitation à capteur peut être alimentée en l'énergie nécessaire à son fonctionnement par l'appareil d'interrogation/exploitation.

15. Repère d'identification suivant l'une des revendications 1 à 14, caractérisé en ce qu'il est prévu comme commutateur (7) au moins une diode de commutation.

16. Repère d'identification suivant l'une des revendications 1 à 5, caractérisé en ce qu'il est prévu un accumulateur électrique pour accumuler l'énergie fournie par des capteurs.

17. Repère d'identification suivant la revendication 16, caractérisé en ce qu'un commutateur à valeur de seuil est monté en aval de l'accumulateur.

18. Repère d'identification suivant l'une des revendications 1 à 17, caractérisé par des moyens pour remettre à l'état initial la commutation de réflecteur.
